# EUROPEAN PATENT SPECIFICATION

(11) **EP 3 269 488 B1**
(45) Date of publication and mention of the grant of the patent: **11.03.2020**
(21) Application number: 17179743.4
(22) Date of filing: 05.07.2017
(51) Int. Cl.: B23K 9/20, B23K 11/00

(54) **JOINING ELEMENT HOLDER, JOINING HEAD, JOINING ROBOT AND METHOD OF JOINING**
FÜGEELEMENTHALTER, FÜGEKOPF, FÜGEROBOTER UND VERFAHREN ZUM FÜGEN
SUPPORT D'ÉLÉMENT D'ASSEMBLAGE, TÊTE D'ASSEMBLAGE, ROBOT D'ASSEMBLAGE ET PROCÉDÉ D'ASSEMBLAGE

(30) Priority: 14.07.2016 DE 102016112921
(43) Date of publication of application: 17.01.2018
(73) Proprietor: Newfrey LLC, New Britain, CT 06053 (US)
(72) Inventor: Schneider, Michael, 35394 Gießen (DE); Schneider, Manuel, 35394 Gießen (DE); Schug, Alexander, 35394 Gießen (DE)
(74) Representative: SBD IPAdmin

(56) References cited:
- DE-A1-102010 018 075
- JP-U- S49 144 832
- US-A- 2 816 210
- US-A- 3 293 402
- US-B1- 6 175 094

## Description

The present invention relates to a joining element holder according to the preamble of claim 1 (see for example US 6 175 094).

A joining head of this kind is already known in the prior art, notably from DE102010018075. The joining element holder of the joining head can be of slotted or collet-type construction, for example, and, in particular, can have a contour matched to the joining element on the clamping portion, and wherein the clamping portion can be designed in such a way that, when a joining element is moved into a joining position, the clamping portion expands radially outwards to allow the joining element to be joined to be pushed through at least partially.

In joining heads of this kind, the joining elements are preferably blown into a storage position (this process of blowing in is in some cases also referred to as shooting) and are then pushed axially in a joining direction into a joining position by means of the loading pin.

The loading pin preferably remains in the forward position, thus enabling axial forces that occur during a joining process to be absorbed by the loading pin.

The present invention furthermore relates to a joining element holder, to a joining robot and to a method for joining joining elements.

Joining joining elements, e.g. weld studs, balls, weld nuts, T-bolts, annular flanged studs etc., to the surface of a workpiece is a known practice in the field of joining technology. This includes, in particular, "stud welding", in which a joining element is welded to the surface of a workpiece. Alternative joining techniques comprise adhesive bonding of a joining element to the surface of a workpiece, for example.

Processes of this kind are often carried out in an automated way, especially in the motor vehicle industry, wherein a large number of joining elements is joined to a vehicle panel, in particular the body panel, in order to act as anchors for fastening devices, trim elements etc. or as earthing studs, for example. Generally, automated joining of joining elements to workpieces is achieved by means of a joining head on a robot arm. In this case, the joining head is connected to a supply device, which supplies the electric joining current (welding current and/or induction current) and other control signals, for example.

It is furthermore preferred if the joining elements are fed to the joining head in an automated manner. Generally, this is accomplished by means of compressed air through "supply hoses". The clamping portion and the loading pin serve to hold the stud in a defined standby position/joining position, starting from which a joining process can be initiated.

In automated vehicle production, it is necessary, for example, to join a plurality of joining elements to a workpiece, preferably the body. In this case, locations at which a joining element is to be joined may in some cases be accessible only with difficulty.

The provision of an axially long joining element holder can therefore be envisaged. This makes it possible to carry out joining even at locations which can be reached only with difficulty since the joining element holder preferably has a smaller radial extent than the joining head.

In the case of joining heads having joining element holders of this kind, a loading pin with a corresponding loading pin travel and, accordingly, a fluid cylinder with a corresponding fluid cylinder travel must be provided. As a consequence, large interfering contours arise on that axial end of a joining head which lies opposite a joining tip/a joining end, especially owing to the fluid cylinder. These interfering contours can limit the accessibility of the joining head.

It is therefore the underlying object of the present invention to indicate an improved joining element holder, an improved joining head with such holder, an improved joining robot with such joining head, and an improved joining method using such joining head, in particular for joining in locations that are difficult to access.

A joining element holder according to the present invention is defined in claim 1. A joining head having such joining element holder is defined in claim 4, an automated robot with such joining head is defined in claim 7 and a method of joining elements using such joining head is defined in claim 8.

By means of the at least one joining element in the guiding portion, axial forces which occur during the joining process can be transmitted from the element to be joined to the loading pin via the at least one joining element in the guiding portion. It is thereby possible to shorten the required travel of the loading pin and hence also that of the fluid cylinder actuating the loading pin in accordance with the length of the at least one joining element situated in the joining element holder.

A plurality of joining elements, preferably two to five, in particular two to ten or more joining elements, can be accommodated in the guiding portion. As a result, the guiding portion can have a large axial length without the need to increase the loading pin travel and the fluid cylinder travel in a corresponding manner. Consequently, it is possible to provide a joining head with a long guiding portion without correspondingly increasing the size of interfering contours arising at a joining-head end opposite the joining end.

Here, the joining elements situated in the guiding portion act as a kind of column/stack and transmit the axial forces occurring during the joining process between the joining element to be joined and the loading pin, and it is possible, in particular, in this way for a supporting force of the loading pin to be transmitted as far as the joining element to be joined.

In this case, joining elements can be fed to the joining element holder or guiding portion before a joining process as follows: first of all, a joining element is blown in front of or into the introduction portion by means of compressed air via a supply hose or the like, and then this joining element is moved axially in the joining direction by means of the loading pin, after which the loading pin is moved back in the axially opposite direction and, finally, a further joining element is blown in front of or into the introduction portion, thus allowing the loading pin to move this further joining element axially in the joining direction.

This process is preferably repeated until the joining element holder or guiding portion has been filled with joining elements, thus allowing axial forces to be transmitted between a joining element to be joined and the loading pin via the joining elements situated in the joining element holder or guiding portion.

It is also conceivable to accommodate different joining element types in a joining element holder or guiding portion of this kind in order to be able to join different joining element types using the same joining head. It is self-evident that an appropriate way of feeding in the joining elements is preferably used for this purpose.

It is furthermore conceivable to provide a distance piece/distance stud, which is accommodated together with the joining elements in the joining element holder or guiding portion in order in this way to enable different joining element types, in particular joining element types of different axial length, to be joined using the same joining head. In this case, the distance stud is moved along in the same way as a joining element. If there is no joining element to be joined ahead of the distance stud in the joining direction, i.e. when the distance stud is as it were in the joining position, the distance stud is removed, preferably ejected, and a new distance stud or the same distance stud is fed in again to enable the missing axial length/the missing axial travel of the loading pin to be compensated.

A joining element holder of this kind can preferably also be used to retrofit already existing systems. In the case of a joining element holder prefilled with joining elements manually, i.e. by hand, it is preferable if no reprogramming of the joining program sequence is necessary here. In general, however, it is of course also possible to adapt the joining program sequence accordingly during conversion.

The joining robot preferably has a multi-axis robot arm, wherein the feeds for the joining elements, control signals and welding current are preferably integrated into the robot arm or can be mounted on the robot arm. The feeds can also be provided at some other location.

The above object is furthermore achieved by means of a method for joining joining elements, see claim 8. The method has the following steps: feeding a joining element through an introduction portion of a joining element holder, wherein the joining element is preferably blown in front of the introduction portion and then pushed by means of a loading pin through a retention device for captive retention; feeding at least one further joining element into a guiding portion, such that the further joining element can transmit axial forces between a loading pin and the first joining element fed in; axial movement of the first joining element fed in into a joining position by means of the loading pin and of the at least one further joining element, wherein, in the joining position, the joining element to be joined is clamped in a clamping portion of the joining element holder and projects axially from the joining element holder in a joining direction; supporting the joining element which is in the joining position by means of the loading pin and of the at least one further joining element; axial movement of a joining head in the joining direction; and joining the joining element that is in the joining position to a workpiece.

The object is thus fully achieved.

In a preferred embodiment, the guiding portion is arranged between the clamping portion and the introduction portion. This enables the joining head to be produced in a structurally simple manner.

The guiding portion has a guiding sleeve, which is arranged at least partially radially within the joining element holder and which is preferably made of plastic and designed to be interchangeable. It is thereby possible to adapt the guiding sleeve specifically to the joining elements to be joined. Moreover, only small forces preferably act on the guiding sleeve, thus allowing the guiding sleeve to be produced from a lower-cost material. In the event of damage or wear to the guiding sleeve, this can preferably be exchanged easily and quickly without having to exchange the complete joining element holder or joining head.

It is furthermore possible to convert the same joining element holder or joining head to different joining element types by providing different guiding sleeves. It is thereby possible to convert a joining robot already fitted with a joining head of this kind in a short time and with little effort.

The guiding sleeve preferably electrically insulates the joining element holder and/or the joining head from the at least one joining element accommodated in the guiding portion. In this way, a welding current can be fed to the joining element to be joined in a structurally simple manner, e.g. via the joining element holder, without the occurrence of sparkovers within the joining element holder or joining head. As a result, the joining head is less prone to faults.

Provision can preferably also be made for the loading pin to be electrically insulated, at least at the end which touches the joining elements. It is furthermore also possible for a loading pin guide to be of insulated construction. In this way, sparkovers can be further reduced.

The retention device can have a catch that can be actuated by an actuator for example or, in the case of ferromagnetic joining elements, can have a magnet.

By virtue of the retention device, the joining elements already pushed into the guiding portion cannot get back into the feed channel in the event of a drop-off in the compressed air. As a result, the joining head is less prone to faults. Moreover, it is possible, during filling, to prevent the joining elements from shooting through and hence to prevent damage to the guiding sleeve or to the joining elements already in the guiding portion.

In a particularly preferred embodiment, the retention device is designed as a radial constriction in the introduction portion. It is thereby possible to implement the retention device in a low-cost and structurally simple manner involving a small installation space requirement.

As the joining elements are pushed through the retention device, the radial constriction preferably expands outwards in a radial direction.

In a preferred embodiment, the introduction portion is connected to a radially extending feed channel. This preferred embodiment enables the interfering contours on the joining head to be further reduced.

The joining element holder and the guiding sleeve are preferably of slotted design. The guiding sleeve is preferably provided with a conically tapering constriction from the introduction/infeed side, wherein this constriction prevents the joining elements from flying through when injected or from getting back into the feed channel if there is a drop-off in the feed air. The loading pin can push the joining elements successively through the conical constriction of the guiding sleeve until the guiding sleeve has been completely filled with joining elements. The column/stack of joining elements acts like a multi-part loading pin.

Here, the length of the joining element holder and of the guiding sleeve preferably depends on the corresponding joining element length. Depending on the type of joining element, attachment of a corresponding joining element holder allows the same loading pin to be used in a joining head.

According to the prior art, joining elements are held by means of a joining element holder which is slotted two to x times. In this case, a joining element is shot-in, loaded with a loading pin and joined, preferably welded, for each welding cycle. The disadvantage here is the large loading pin travel, which means that the joining head has a large interfering contour and hence poor accessibility.

It is self-evident that the features which are mentioned above and those which remain to be explained below can be used not only in the respectively indicated combination but also in other combinations or in isolation without exceeding the scope of the present invention.

Illustrative embodiments of the invention are shown in the drawings and are explained in greater detail in the following description. In the drawings:
- Fig. 1: shows a schematic illustration of a joining robot according to the invention,
- Figs. 2a-c: show schematically a partial cross section through a joining head having a joining element holder, a loading pin and a fluid cylinder, each with different types of joining element, and
- Fig. 3: shows a joining element holder according to the invention having a guiding sleeve.

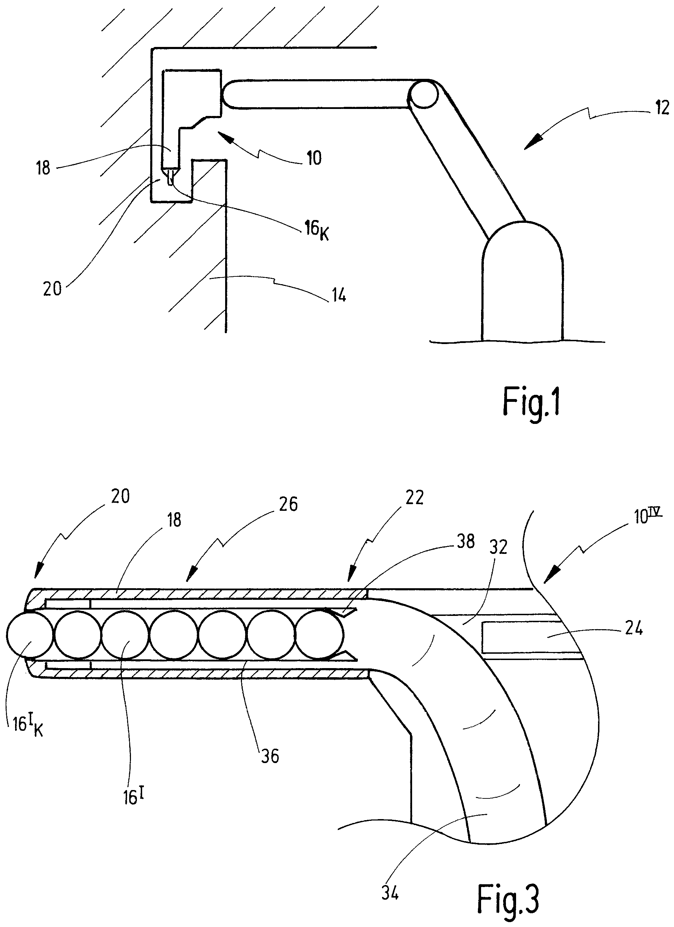

Fig. 1 shows a joining head 10, which is arranged on an arm of a joining robot 12 in order to process a workpiece 14. In this case, a joining element 16 is to be joined to the workpiece 14. The joining head 10 has a joining element holder 18. The joining element 16_{K}, in this example a stud, is clamped in a clamping portion 20 of the joining element holder 18.

The workpiece 14 has a special contour, by means of which the advantages of the present invention can be clearly shown. The axially long joining element holder 18 makes it possible to fit the joining element 16_{K} in a recess in the workpiece 14, wherein the joining head 10 according to the invention does not have an interfering contour at an end opposite the joining end, that is to say, in particular, is of axially short construction. This enables the joining head 10 to fit a joining element 16 in a recess even though the workpiece 14 has an interfering profile on a side opposite the joining location in the joining direction. Owing to the interfering profile of the workpiece 14, the joining head 10 may have only a limited maximum axial length.

Such joining requirements can arise especially in motor vehicle construction/body construction since, in this case, joining elements 16 often have to be attached as anchors for trim components or as earthing studs and these anchors/earthing studs are preferably to be joined at locations which are accessible only with difficulty.

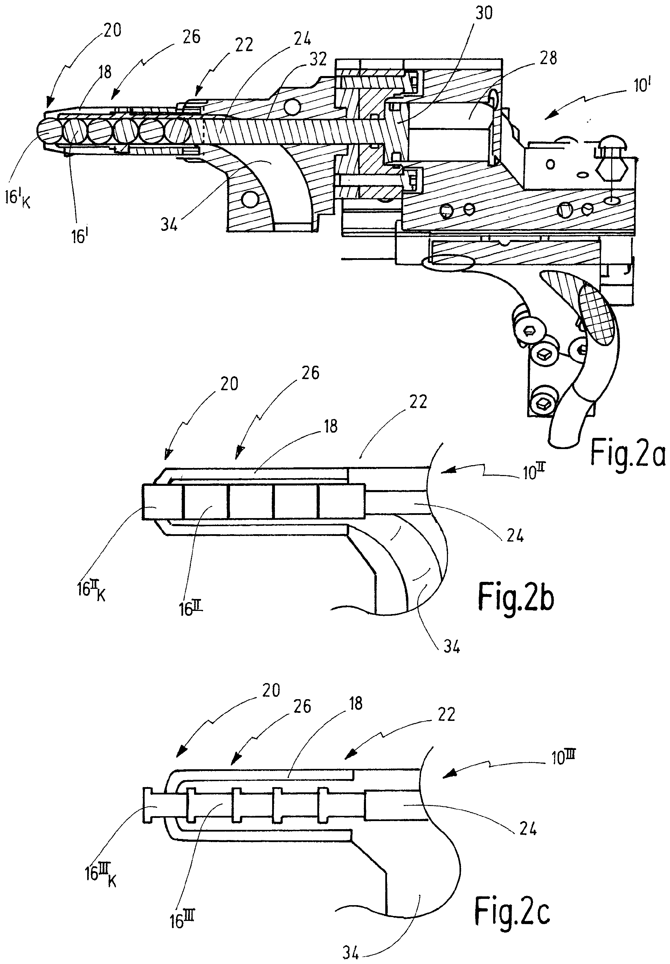

Fig. 2a shows schematically a joining head 10^{I} for joining weld balls 16^{I}. In Fig. 2a, a total of six weld balls 16^{I} is accommodated in the joining element holder 18. The number of joining elements 16^{I} accommodated in the joining element holder 18 is chosen only by way of example here and, of course, it is also possible for more or fewer joining elements 16^{I} to be accommodated, depending on the specification required. It is self-evident that the joining element holder 18 can be made axially longer or shorter in a corresponding way.

The joining head 10^{I} is shown in the joining position, wherein the joining element 16^{I}_{K} clamped into the clamping portion 20 is supported by virtue of the fact that a loading pin 24 rests against the last joining element 16^{I} fed in in the region of an introduction portion 22. In this way, the joining elements 16^{I} stored in a guiding portion 26 of the joining element holder 18 can transmit axial forces, which occur especially during the joining process itself, between the joining element 16^{I}_{K} to be joined and the loading pin 24.

The loading pin 24 is moved axially forwards or backwards along a joining axis by a schematically illustrated fluid cylinder 28, wherein the fluid cylinder 28 has a piston 30, the cross-sectional area of which is preferably chosen to match the force to be applied axially. The loading pin 24 is in operative connection with the fluid cylinder piston 30 and is preferably accommodated in a guide 32.

Fig. 2a schematically illustrates a feed channel 34 for further joining elements 16^{I}, said channel being connected to the introduction portion 22. Via the feed channel 34, further joining elements 16^{I} can be blown into a storage position, preferably individually, i.e. in front of or into the introduction portion 22, and can then be pushed axially into the guiding portion 26 in the joining direction by means of the loading pin 24.

In order to join a joining element 16^{I}, it is preferred to fill the joining element holder 18 with joining elements 16^{I}, thus allowing these joining elements 16^{I} to transmit axial forces between the loading pin 24 and the joining element 16^{I}_{K} to be joined.

In the case of an empty or only partially filled joining element holder 18, the loading pin 24 is pulled back axially counter to the joining direction in order to free the introduction portion 22, if this has not already taken place. After that, a joining element 16^{I} is blown into or in front of the introduction portion 22. The loading pin 24 is moved in the joining direction and pushes the last joining element 16^{I} fed in into the guiding portion 26 of the joining element holder 18. After that, the loading pin 24 is pulled back again and frees the introduction portion 22. Thus, a further joining element 16^{I} can be blown into or in front of the introduction portion 22. This process is repeated until the guiding portion 26 of the joining element holder 18 has been filled.

The joining element holder 18, the joining head 10 or the joining robot 12 preferably have a detection device, which can detect whether the guiding portion 26 of the joining element holder 18 has been filled. This can be accomplished, for example, by counting the joining elements 16 fed in or by measuring a force required to press the last joining element 16 fed in into the guiding portion 26 of the joining element holder 18 by means of the loading pin 24. If the guiding portion 26 of the joining element holder 18 has been completely filled, then, when the last joining element 16 fed in is pushed through, the joining element 16 which is furthest in the joining direction is pushed into the clamping portion 20, i.e. into the joining position, this resulting in a high expenditure of force since the clamping portion 20 first of all has to be pushed open radially outwards. The joining element 16_{K} can then be joined in a manner known per se from the prior art.

In these cases, the joining elements 16 are fed to the joining head 10 by being blown in using compressed air, which is to be taken as illustrated. Of course, the joining elements 16 can also be accommodated from the outset or can be fed to the joining element holder 18 by methods known per se in the prior art without exceeding the scope of the present invention.

After joining, the joined joining element 16^{I} remains on the workpiece, wherein initially no further joining element 16^{I} follows on into the joining position. Thus, the clamping portion 20 initially remains substantially free. The loading pin 24 is moved back by means of the fluid cylinder 28, thus allowing a further joining element 16^{I} to be blown in front of or into the introduction portion 22. The loading pin 24 is then moved axially in the joining direction and pushes the last joining element 16^{I} to be fed in axially in the joining direction, with the result that all the joining elements 16^{I} situated in the guiding portion 26 are moved axially in the joining direction. During this process, the joining element 16^{I}_{K} which is furthest in the joining direction is pushed into the joining position and clamped in the clamping portion 20.

The loading pin 24 preferably remains in this position, thus allowing the joining element 16^{I}_{K} situated in the joining position, i.e. clamped in the clamping portion 20, to be joined.

The joining element holder 18 is preferably of slotted design in the axial direction, with the result that, when a joining element 16^{I} is pushed into the joining position, the axially extending tongues formed by the slots bend open radially outwards and then clamp the joining element 16^{I}_{K} to be joined in the clamping portion 20.

Fig. 2b shows another joining head 10^{II}, the structure of which corresponds substantially to the joining head 10^{II} shown in Fig. 2a. In Fig. 2b, weld studs 16^{II}, not weld balls 16^{I}, are shown. The joining head 10" is in the joining position. The loading pin 24 has been extended axially in the joining direction and is resting on the last joining element 16^{II} fed in, with the result that axial forces can be exchanged or transmitted between the joining element 16^{II}_{K} to be joined and the loading pin 24 by the joining elements 16^{II} situated in the guiding portion 26 of the joining element holder 18. The last joining element 16^{II} to be fed in through the feed channel 34 is preferably pushed into the guiding portion 26 of the joining element holder 18 by the loading pin 24, wherein the loading pin 24 then remains in this axial position, at least until the joining element 16^{II}_{K} to be joined has been joined.

Fig. 2c shows another example, which corresponds substantially to the structure shown in Figs 2a and 2b. The joining head 10^{III} in Fig. 2c is likewise in a joining configuration. Flanged studs 16^{III} are accommodated in the joining element holder 18 of the joining head 10^{III}.

Another embodiment of a joining head 10^{IV} is shown in Fig. 3. The joining head 10^{IV} corresponds substantially to the joining heads 10 which are shown in Figs 2a-2c, and identical features are therefore denoted by the same reference numerals. For reasons of clarity, the loading pin 24 is shown in a retracted position, in which it is preferably accommodated completely in the guide 32. The joining element holder 18 has a guiding sleeve 36, in which the joining elements 16^{I}, in this example weld balls, are accommodated. In this example, the guiding portion 26 of the joining element holder 18 is completely filled with joining elements 16^{I}.

According to the present invention, the guiding sleeve 36 has a radial constriction 38 on the introduction portion 22. This radial constriction 38 acts as a retention device, which prevents joining elements 16^{I} in the guiding portion 26 getting back into the feed channel 34.

Here, the guiding sleeve 36 is preferably of slotted design in the axial direction, as is the joining element holder 18, namely in such a way that the guiding sleeve 36 can expand radially outwards in the feed region 22 when a joining element 16^{I} is pushed axially in the joining direction by the loading pin 24 and is pushed through the radial construction 38. Here, the guiding sleeve 36 is preferably manufactured from plastic and is interchangeable. This enables a joining element holder 18 or a joining head 10 to be converted to different types of joining elements 16 by inserting different guiding sleeves 36.

The guiding sleeve 36 can preferably be clipped into the joining element holder 18 or the joining head 10. Of course, bonding in, screwing in or pushing in the guiding sleeve 36 is also possible.

The guiding sleeve 36 preferably electrically insulates all the joining elements 16, apart from the joining element 16_{K} to be joined, from the joining element holder 18 and/or the joining head 10.

Overall, it is also conceivable to make available a joining element holder 18 which can be mounted on a joining head 10 instead of an axially short joining element holder. In this way, it is structurally a simple matter to convert a joining head 10 since no adaptation of the loading pin travel is preferably necessary.

## Claims

1. Joining element holder (18) for a joining head (10), which has a clamping portion (20) for clamping a joining element (16) to be joined, wherein the clamping portion (20) is designed to exert a radially inward-directed clamping force for clamping the joining element (16) to be joined, wherein the joining element holder (18) has an introduction portion (22) at an axial end opposite the clamping portion (20), wherein joining elements (16) can be fed to the joining element holder (18) via the introduction portion (22),
wherein the joining element holder (18) has a guiding portion (26) between the clamping portion (20) and the introduction portion (22), wherein the guiding portion (26) is designed to accommodate at least one joining element (16), such that axial forces between a joining element (16) held in the clamping portion (20) and a loading pin (24) can be transmitted by at least one joining element (16) accommodated in the guiding portion (26),
**characterized in that**
the guiding portion (26) has a guiding sleeve (36), which is arranged at least partially radially within the joining element holder, and the guiding sleeve (36) has a radial constriction (38) on the introduction portion (22), said radial constriction (38) acting as a retention device, which prevents joining elements (16^{I)} in the guiding portion (26) getting back into a feed channel (34).

2. Joining element holder (18) according to Claim 1, **characterized in that** the guiding sleeve (36) electrically insulates the joining element holder (18) from the at least one joining element (16) accommodated in the guiding portion (26).

3. Joining element holder (18) according to any of Claims 1 to 2, wherein the guiding sleeve (36) is of slotted design.

4. Joining head (10) for joining, preferably welding, joining elements (16), having a joining element holder (18), according to any of claims 1 to 3,
a loading pin (24) for absorbing axial forces which occur during a joining process, wherein the joining element (16) to be joined can be pushed axially into a joining position by the loading pin (24) before a joining process, in which joining position the joining element (16) to be joined is clamped in the clamping portion (20) and projects axially from the joining element holder (18) in a joining direction, and
a fluid cylinder (28) for actuating the loading pin (24).

5. Joining head (10) according to Claim 4, **characterized in that** the guiding sleeve (36) electrically insulates the joining head (10) from the at least one joining element (16) accommodated in the guiding portion (26).

6. Joining head (10) according to one of Claims 4 to 5, **characterized in that** the introduction portion (22) is connected to a radially extending feed channel (34).

7. Automated robot (12) for joining joining elements (16), having a joining head (10) according to one of Claims 4 to 6.

8. Method of joining joining elements (16) by means of a joining head (10) according to one of Claims 4 to 6, comprising the following steps:
- feeding a joining element (16) through the introduction portion (22) of the joining element holder (18);
- feeding at least one further joining element (16) into the guiding portion (26), such that the further joining element (16) can transmit axial forces between the loading pin (24) and the first joining element (16) fed in;
- axial movement of the first joining element (16) fed in into a joining position by means of the loading pin (24) and of the at least one further joining element (16), wherein, in the joining position, the joining element (16) to be joined is clamped in the clamping portion (20) of the joining element holder (18) and projects axially from the joining element holder (18) in a joining direction;
- supporting the joining element (16) which is in the joining position by means of the loading pin (24) and of the at least one further joining element (16);
- axial movement of the joining head (10) in the joining direction; and
- joining the joining element (16) that is in the joining position to a workpiece (14).

## Patentansprüche

1. Fügeelementhalter (18) für einen Fügekopf (10), der einen Klemmabschnitt (20) zum Klemmen eines Fügeelements (16), das anzufügen ist, aufweist, wobei der Klemmabschnitt (20) konzipiert ist, um eine radial nach innen gerichtete Klemmkraft zum Klemmen des Fügeelements (16), das anzufügen ist, auszuüben, wobei der Fügeelementhalter (18) einen Einführabschnitt (22) an einem axialen Ende, dem Klemmabschnitt (20) entgegengesetzt, aufweist, wobei Fügeelemente (16) durch den Fügeelementhalter (18) über den Einführabschnitt (22) eingeführt werden können,
wobei der Fügeelementhalter (18) einen Führungsabschnitt (26) zwischen dem Klemmabschnitt (20) und dem Einführabschnitt (22) aufweist, wobei der Führungsabschnitt (26) konzipiert ist, um mindestens ein Fügeelement (16) derart aufzunehmen, dass die axialen Kräfte zwischen einem Fügeelement (16), das in dem Klemmabschnitt (20) gehalten wird, und einem Ladestift (24) von mindestens einem Fügeelement (16), das in dem Führungsabschnitt (26) aufgenommen ist, übertragen werden können,
**dadurch gekennzeichnet, dass**
der Führungsabschnitt (26) eine Führungshülse (36) aufweist, die mindestens teilweise radial innerhalb des Fügeelementhalters eingerichtet ist, und die Führungshülse (36) eine radiale Einschnürung (38) auf dem Einführabschnitt (22) aufweist, wobei die radiale Einschnürung (38) als eine Rückhaltevorrichtung wirkt, die verhindert, dass Fügeelemente (16) in dem Führungsabschnitt (26) in einen Zuführkanal (34) zurückgelangen.

2. Fügeelementhalter (18) nach Anspruch 1, **dadurch gekennzeichnet, dass** die Führungshülse (36) den Fügeelementhalter (18) von dem mindestens einen Fügeelement (16), das in dem Führungsabschnitt (26) aufgenommen ist, elektrisch isoliert.

3. Fügeelementhalter (18) nach einem der Ansprüche 1 bis 2, wobei die Führungshülse (36) ein Schlitzdesign aufweist.

4. Fügekopf (10) zum Anfügen, vorzugsweise Schweißen, von Fügeelementen (16), die einen Fügeelementhalter (18) nach einem der Ansprüche 1 bis 3 aufweisen,
einen Ladestift (24) zum Absorbieren axialer Kräfte, die während eines Fügeprozesses auftreten, wobei das Fügeelement (16), das anzufügen ist, axial in eine Fügeposition durch den Ladestift (24) vor einem Fügeprozess geschoben werden kann, wobei das Fügeelement (16), das anzufügen ist, in der Fügeposition in den Klemmabschnitt (20) geklemmt ist und axial aus dem Fügeelementhalter (18) in eine Fügerichtung vorragt, und
einen Fluidzylinder (28) zum Betätigen des Ladestifts (24).

5. Fügekopf (10) nach Anspruch 4, **dadurch gekennzeichnet, dass** die Führungshülse (36) den Fügekopf (10) von dem mindestens einen Fügeelement (16), das in dem Führungsabschnitt (26) aufgenommen ist, elektrisch isoliert.

6. Fügekopf (10) nach einem der Ansprüche 4 bis 5, **dadurch gekennzeichnet, dass** der Einführabschnitt (22) mit einem sich radial erstreckenden Zuführkanal (34) verbunden ist.

7. Automatisierter Roboter (12) zum Anfügen von Fügeelementen (16), der einen Fügekopf (10) nach einem der Ansprüche 4 bis 6 aufweist.

8. Verfahren zum Anfügen von Fügeelementen (16) mittels eines Fügekopfs (10) nach einem der Ansprüche 4 bis 6, das die folgenden Schritte umfasst:
- Zuführen eines Fügeelements (16) durch den Einführabschnitt (22) des Fügeelementhalters (18);
- Zuführen mindestens eines weiteren Fügeelements (16) in den Führungsabschnitt (26) derart, dass das weitere Fügeelement (16) axiale Kräfte zwischen dem Ladestift (24) und dem ersten eingeführten Fügeelement (16) übertragen kann;
- axiale Bewegung des ersten Fügeelements (16), das in eine Fügeposition mittels des Ladestifts (24) und des mindestens einen weiteren Fügeelements (16) eingeführt wird, wobei in der Fügeposition das Fügeelement (16), das anzufügen ist, in den Klemmabschnitt (20) des Fügeelementhalters (18) geklemmt ist und axial aus dem Fügeelementhalter (18) in eine Fügerichtung vorragt;
- Stützen des Fügeelements (16), das sich in der Fügeposition befindet, mittels des Ladestifts (24) und des mindestens einen weiteren Fügeelements (16);
- axiale Bewegung des Fügekopfs (10) in die Fügerichtung; und
- Anfügen des Fügeelements (16), das sich in der Fügeposition befindet, an ein Werkstück (14).

## Revendications

1. Support d'élément d'assemblage (18) pour une tête d'assemblage (10), qui a une partie de blocage (20) pour bloquer un élément d'assemblage (16) à assembler, dans lequel la partie de blocage (20) est conçue pour exercer une force de blocage dirigée radialement vers l'intérieur pour bloquer l'élément d'assemblage (16) à assembler, dans lequel le support d'élément d'assemblage (18) a une partie d'introduction (22) à une extrémité axiale en regard de la partie de blocage (20), dans lequel les éléments d'assemblage (16) peuvent être acheminés au support d'élément d'assemblage (18) via la partie d'introduction (22),
dans lequel le support d'élément d'assemblage (18) a une partie de guidage (26) entre la partie de blocage (20) et la partie d'introduction (22), dans lequel la partie de guidage (26) est conçue pour recevoir au moins un élément d'assemblage (16) en sorte que des forces axiales entre un élément d'assemblage (16) maintenu dans la partie de blocage (20) et une goupille de chargement (24) puissent être transmises par au moins un élément d'assemblage (16) reçu dans la partie de guidage (26),
**caractérisé en ce que** :
la partie de guidage (26) a un manchon de guidage (36) qui est agencé au moins en partie radialement dans le support d'élément d'assemblage et le manchon de guidage (36) présente un resserrement radial (38) sur la partie d'introduction (22), ledit resserrement radial (38) agissant comme dispositif de retenue qui empêche les éléments d'assemblage (16^{I}) dans la partie de guidage (26) de retourner dans un canal d'alimentation (34).

2. Support d'élément d'assemblage (18) selon la revendication 1, **caractérisé en ce que** le manchon de guidage (36) isole électriquement le support d'élément d'assemblage (18) du au moins un élément d'assemblage (16) reçu dans la partie de guidage (26).

3. Support d'élément d'assemblage (18) selon l'une quelconque des revendications 1 à 2, dans lequel le manchon de guidage (36) est d'un modèle fendu.

4. Tête d'assemblage (10) pour assembler, de préférence souder des éléments d'assemblage (16) ayant un support d'élément d'assemblage (18), selon l'une quelconque des revendications 1 à 3,
une goupille de chargement (24) pour absorber les forces axiales qui apparaissent au cours d'un processus d'assemblage, dans laquelle l'élément d'assemblage (16) à assembler peut être pressé axialement en position d'assemblage par la goupille de chargement (24) avant un processus d'assemblage, dans laquelle position d'assemblage l'élément d'assemblage (16) à assembler est bloqué dans la partie de blocage (20) et fait saillie axialement du support d'élément d'assemblage (18) dans une direction d'assemblage et
un cylindre à fluide (28) pour actionner la goupille de chargement (24).

5. Tête d'assemblage (10) selon la revendication 4, **caractérisée en ce que** le manchon de guidage (36) isole électriquement la tête d'assemblage (10) du au moins un élément d'assemblage (16) reçu dans la partie de guidage (26).

6. Tête d'assemblage (10) selon l'une quelconque des revendications 4 à 5, **caractérisée en ce que** la partie d'introduction (22) est raccordée à un canal d'alimentation s'étendant radialement (34).

7. Robot automatisé (12) pour assembler des éléments d'assemblage (16), ayant une tête d'assemblage (10) selon l'une quelconque des revendications 4 à 6.

8. Procédé d'assemblage d'éléments d'assemblage (16) au moyen d'une tête d'assemblage (10) selon l'une quelconque des revendications 4 à 6, comprenant les étapes suivantes :
- l'acheminement d'un élément d'assemblage (16) à travers la partie d'introduction (22) du support d'élément d'assemblage (18) ;
- l'acheminement d'au moins un autre élément d'assemblage (16) dans la partie de guidage (26) de sorte que l'autre élément d'assemblage (16) puisse transmettre des forces axiales entre la goupille de chargement (24) et le premier élément d'assemblage (16) qui y est acheminé ;
- le mouvement axial du premier élément d'assemblage (16) acheminé dans une position d'assemblage au moyen de la goupille de chargement (24) et du au moins un autre élément d'assemblage (16), dans lequel, en position d'assemblage, l'élément d'assemblage (16) à assembler est bloqué dans la partie de blocage (20) du support d'élément d'assemblage (18) et fait saillie axialement du support d'élément d'assemblage (18) dans une direction d'assemblage ;
- le support de l'élément d'assemblage (16) qui se trouve en positon d'assemblage au moyen de la goupille de chargement (24) et du au moins un autre élément d'assemblage (16) ;
- le mouvement axial de la tête d'assemblage (10) dans la direction d'assemblage ; et
- l'assemblage de l'élément d'assemblage (16) qui se trouve dans la position d'assemblage à une pièce (14).
